# EUROPEAN PATENT APPLICATION

(11) **EP 4 693 784 A1**
(43) Date of publication of application: **11.02.2026**
(21) Application number: 24818259.4
(22) Date of filing: 05.02.2024
(51) Int. Cl.: H02H 11/00, H02H 7/122, H02M 7/48

(54) **PHOTOVOLTAIC INVERTER, AND PROTECTION METHOD FOR PHOTOVOLTAIC STRINGS**

(30) Priority: 05.06.2023 CN 202310657091
(71) Applicant: Huawei Digital Power Technologies Co., Ltd., Shenzhen, Guangdong 518043 (CN)
(72) Inventor: CAO, Zhen, Shenzhen, Guangdong 518043 (CN); LIU, Chao, Shenzhen, Guangdong 518043 (CN); YANG, Weiwei, Shenzhen, Guangdong 518043 (CN)
(74) Representative: Maiwald GmbH
(86) International application number: PCT/CN2024/075974
(87) International publication number: WO 2024/250721

(57) **Abstract**

The present invention provides a photovoltaic inverter, including a first switch group, a second switch group, an anti-reverse circuit, a DC/DC power conversion circuit, a bus capacitor, and a controller. A first photovoltaic string is connected to the bus capacitor via the first switch group and the anti-reverse circuit sequentially. A plurality of photovoltaic strings are connected to the DC/DC power conversion circuit via a second switch, and the plurality of photovoltaic strings include the first photovoltaic string. The controller is configured to: turn on all switches in the second switch group; and when an overcurrent occurs in a current flowing through a part of switches in the second switch group, turn off the part of switches that is in the second switch group and in which the overcurrent occurs. Alternatively, the controller is configured to: turn on all switches in the second switch group; and when a reverse current occurs in a current flowing through a part of switches in the second switch group, turn off the part of switches that is in the second switch group and in which the reverse current occurs. With this arrangement, when a photovoltaic string is reversely connected, a reverse connection fault can be identified and rectified in a timely manner, thereby improving reliability and safety of a photovoltaic power station.

## Description

### TECHNICAL FIELD

This application relates to the field of new energy power generation, and in particular, to a photovoltaic inverter, a photovoltaic system, and a photovoltaic string protection method.

### BACKGROUND

In recent years, as clean renewable energy, solar energy has been widely used. In a photovoltaic power station, a photovoltaic module converts solar energy into a direct current through photovoltaic effect, and transmits the direct current to a photovoltaic inverter. The photovoltaic inverter further converts the direct current into an alternating current that has a same frequency as the mains. When the photovoltaic inverter is grid-connected for the first time, if a user connects strings of a photovoltaic array to the photovoltaic inverter, some or all photovoltaic strings may be reversely connected due to an improper operation. If a controller of the photovoltaic inverter cannot obtain, in a timely manner based on sampling information, an abnormality that the photovoltaic strings are reversely connected, the photovoltaic strings or even the inverter may be burnt. This may severely affect safety of the photovoltaic power station.

### SUMMARY

To resolve the foregoing problem, embodiments of this application provide a photovoltaic inverter and a photovoltaic string protection method, to identify a reverse connection fault and disconnect a short-circuit loop of a photovoltaic string in a timely manner when some or all photovoltaic strings are reversely connected. This further improves safety and reliability of a photovoltaic power station.

According to a first aspect, an embodiment of this application provides a photovoltaic inverter, including a first switch group, a second switch group, a DC/DC power conversion circuit, a bus capacitor, and a controller. One end of the first switch group is configured to connect to a first photovoltaic string, and the other end of the first switch group is configured to connect to the bus capacitor, so that the bus capacitor supplies power to the controller when the first switch group is turned on. One end of the second switch group is connected to a second photovoltaic string, and the other end of the second switch group is connected to the DC/DC power conversion circuit. After the controller is powered on and the second switch group is turned on, the controller is configured to: in response to that an overcurrent occurs in a current flowing through the second switch group, turn off a switch that is in the second switch group and in which the overcurrent occurs. Alternatively, after the controller is powered on and the second switch group is turned on, the controller is configured to: in response to that a current flowing through the second switch group includes a reverse current, turn off a switch that is in the second switch group and in which the reverse current occurs.

With this arrangement, before the second switch group is turned on, it ensures that the controller can work normally. Further, after the second switch group is turned on, the controller can: identify, in a timely manner, whether a fault such as a reverse connection of a photovoltaic string or a short circuit of a photovoltaic module occurs in the second photovoltaic string; and when the fault occurs, turn off, in a timely manner, the switch that is in the second switch group and in which the reverse current or the overcurrent occurs, to rectify the fault.

It should be noted that, that the other end of the first switch group is configured to connect to the bus capacitor means that electrical energy generated by the first photovoltaic string may be used for charging the bus capacitor via the first switch group, so that the bus capacitor supplies power to the controller. During actual application, there may be another component between the first switch group and the bus capacitor, for example, a DC/DC power converter. This is not limited in this application.

In addition, the first photovoltaic string may be one photovoltaic string, and the photovoltaic string includes a plurality of photovoltaic modules connected in series, or the first photovoltaic string may be two or three photovoltaic strings connected in parallel. The second photovoltaic string is a plurality of photovoltaic strings, and each photovoltaic string includes a plurality of photovoltaic modules connected in series. Output ends of one, two, or three photovoltaic strings are connected in parallel to one direct current terminal of the photovoltaic inverter, and are connected to the second switch group via the direct current terminal. During actual application, a plurality of direct current terminals are usually disposed on the photovoltaic inverter, and each direct current terminal may be connected to one, two, or three photovoltaic strings. This is not limited in this application. It should be noted that the first photovoltaic string may be a part of the second photovoltaic string.

In a possible implementation, the photovoltaic inverter includes an anti-reverse circuit, and the anti-reverse circuit is located on a connection line of the first photovoltaic string and the bus capacitor. For example, one end of the anti-reverse circuit is configured to connect to the first switch group, and the other end of the anti-reverse circuit is configured to connect to the bus capacitor; or one end of the anti-reverse circuit is configured to connect to the first photovoltaic string, and the other end of the anti-reverse circuit is configured to connect to the first switch group. The anti-reverse circuit is disposed, so that it ensures that the first photovoltaic module is correctly connected to the photovoltaic inverter, to charge a direct current bus.

Specifically, before the photovoltaic inverter is grid-connected, a user may first manually turn on the first switch group, so that the first photovoltaic module supplies power to the direct current bus or the bus capacitor. With this arrangement, an auxiliary power supply may further obtain power from the direct current bus or the bus capacitor, and supply power to the controller, so that the controller works normally. After the controller works normally, the second switch group is turned on, so that electrical energy generated by the plurality of photovoltaic strings is input to the photovoltaic inverter. The second switch group may be controlled by the controller to be turned on, or may be manually turned on by the user. After the second switch group is turned on, if some of the plurality of photovoltaic strings connected to the photovoltaic inverter are reversely connected, or if all of the plurality of photovoltaic strings connected to the photovoltaic inverter are reversely connected, or if an overcurrent occurs in a current flowing through a part of switches in the second switch group, the controller can identify a fault in a timely manner, and turn off a corresponding switch that is connected in series to the reversely connected photovoltaic string and that is in the second switch group. Therefore, with this arrangement, an identification rate of the reverse connection fault of the photovoltaic string can be significantly improved, and reliability of a photovoltaic power station can be improved.

It should be noted that, during actual application, a quantity of photovoltaic strings in the first photovoltaic string may be changed. This is not limited in this application. For example, the first photovoltaic string includes N photovoltaic strings, and output ends of the N photovoltaic strings are connected in parallel to the photovoltaic inverter, and connected in series to the first switch group. In addition, during actual application, a quantity of photovoltaic units in each photovoltaic string is not limited. For example, there may be one or more photovoltaic units in one photovoltaic string.

It should be noted that, during actual application, a plurality of photovoltaic strings connected in series to the second switch group are usually connected in series to the second switch group through ports disposed on the photovoltaic inverter. For example, the plurality of photovoltaic strings connected in series to the second switch group are connected in series to the second switch group through M ports. A quantity of the plurality of photovoltaic strings connected in series to the second switch group may be an integer greater than or equal to M. When the quantity of the plurality of photovoltaic strings connected in series to the second switch group is M, one photovoltaic string is connected in series to a part of switches in the second switch group through one port; or when the quantity of the plurality of photovoltaic strings connected in series to the second switch group is greater than M, there may be a case in which at least two photovoltaic strings are connected in series to a part of switches in the second switch group through one port. This is not limited in this application. It should be noted that one port in this application is a general term of functions. During actual application, one port may be further divided into a positive electrode port and a negative electrode port. The positive electrode port is configured to connect to a positive electrode of a photovoltaic string, and the negative electrode port is configured to connect to a negative electrode of a photovoltaic string.

It should be noted that, during actual application, a quantity of switches in the first switch group is not limited in this application. To be specific, there is at least one switch on a connection line of the first photovoltaic string and the DC/DC power converter, and the switch can implement effect of connecting and disconnecting the first photovoltaic string. For example, a switch may be connected in series to a positive output end of the first photovoltaic string, or a switch may be connected in series to a negative output end of the first photovoltaic string. Certainly, a switch may be connected in series to both the positive output end of the first photovoltaic string and the negative output end of the first photovoltaic string. This is not limited in this application.

It should be noted that, during actual application, a quantity of switches in the second switch group is not limited in this application either. To be specific, there is at least one switch on a connection line of each port and the DC/DC power converter. Details are not described again.

In a possible implementation, after the controller is powered on and the second switch group is turned on, if no overcurrent occurs in the current flowing through the second switch group and no reverse current occurs in the current flowing through the second switch group, the controller is configured to turn off the first switch group. If the controller does not identify the reverse connection fault of the photovoltaic string, it indicates that a connection status of the second photovoltaic string is normal. Therefore, to enable a plurality of photovoltaic strings to better transmit energy for the photovoltaic inverter, the first switch group may be turned off, so that the plurality of photovoltaic strings supply power normally. Specifically, when the connection status of the second photovoltaic string is normal, a direct current of the second photovoltaic string may be smoothly transmitted to the photovoltaic inverter, and be used for charging the bus capacitor. In other words, in this case, even if the first switch group is turned off, the controller can still work normally. Further, when the first photovoltaic string is a part of the second photovoltaic string, the first switch group is connected in series to an anti-reverse circuit. However, the anti-reverse circuit usually includes a component such as a resistor or a diode. Therefore, if the first switch group is not turned off for a long time, energy transmitted by the first photovoltaic string for the photovoltaic inverter is lost due to the diode or the resistor in the anti-reverse circuit. Therefore, with this arrangement, energy utilization efficiency of the photovoltaic string can be improved, and an overall power generation amount of a photovoltaic power generation system can be increased. More importantly, during actual application, in consideration of costs, even if the first switch group has a remote turn-off mechanism, the first switch group is usually not equipped with a tripping mechanism or an arc-suppressing chamber while the second switch is usually equipped with a remote turn-off mechanism or a tripping mechanism and an arc-suppressing chamber. For the first switch group that is not equipped with the tripping mechanism, if a fault such as a short circuit or an overcurrent occurs in the first photovoltaic string, when a handle corresponding to the first switch group is stuck, even if the controller sends a remote turn-off signal, the first switch group cannot be smoothly turned off. Therefore, it is difficult to reliably rectify the fault. For the first switch group that is not equipped with the arc-suppressing chamber, if a fault such as a short circuit or an overcurrent occurs in the first photovoltaic string, it is difficult to cool, in a timely manner, an electric arc generated when the first switch group is turned off. As a result, the second switch group is easily burnt. In serious cases, the photovoltaic inverter and the entire photovoltaic system may even catch fire and explode. Therefore, when the first photovoltaic string is a part of the second photovoltaic string, in a case in which the second switch group is turned on and a connection status between the second photovoltaic string and the photovoltaic inverter is normal, if the controller can control, in a timely manner, the first switch to be turned off, even if a fault such as overcurrent or a reverse current occurs in the first photovoltaic string later, the second switch group can also safely and reliably rectify the fault.

In a possible implementation, the photovoltaic inverter includes an indicator light. If the first switch group is turned on to enable the controller to obtain power from the bus capacitor and be powered on, the indicator light is on. That the indicator light is on indicates a user to turn on the second switch group. With this arrangement, the user can more intuitively sense a status of the controller, and manually turn on the second switch group when the controller is in a normal working state, so that energy generated by the second photovoltaic string is smoothly transmitted to the photovoltaic inverter.

In a possible implementation, after the second switch group is turned on, the indicator light remains on. That the indicator light remains on indicates the user to turn off the first switch group after the second switch group is turned on. During actual application, in consideration of costs, the first switch group may be further set to a non-control switch. In other words, a turn-on or turn-off state of the first switch group can be adjusted only manually, but cannot be adjusted by the controller. As described above, the first switch group is usually not equipped with the tripping mechanism or the arc-suppressing chamber, and the second switch group is usually equipped with the remote turn-off mechanism or the tripping mechanism and the arc-suppressing chamber. Therefore, after the second switch group is turned on, that is, after the photovoltaic inverter is normally grid-connected and works, if the first switch group remains turned on, when a short-circuit fault occurs in the first photovoltaic string, the controller cannot identify a fault and turn off the first switch group in a timely manner. As a result, the short-circuit fault exists in the first photovoltaic string for a long time. In serious cases, the first photovoltaic string and the photovoltaic inverter may even catch fire and explode. Based on this, the indicator light is disposed, so that the user can more intuitively sense the status of the controller, and then manually turn off the first switch group after the second switch group is turned on. Later, even if a short-circuit fault or an overcurrent fault occurs in the first photovoltaic string, the second switch group can also rectify the fault in a timely and reliable manner. This improves safety and reliability of a photovoltaic system.

In a possible implementation, the photovoltaic inverter includes the indicator light. If the first switch group is turned on not to enable the controller to obtain power from the bus capacitor and be powered on, the indicator light is off. That the indicator light is off indicates that a fault exists. For example, the fault reminds the user to check whether the first optical string is reversely connected or faulty. As described above, when the connection status of the first photovoltaic string is normal, that is, no reverse connection occurs, a direct current output by the first photovoltaic string can be smoothly transmitted to the direct current bus or the bus capacitor, to power on the controller. The indicator light is disposed, so that the user can more intuitively sense the status of the controller, further learn that a reverse connection or another fault is likely to occur in the first photovoltaic string when the switch is off, and check the first photovoltaic string in a targeted manner. This ensures reliable power-on and grid connection of the photovoltaic inverter.

In a possible implementation, the anti-reverse circuit includes a resistor and a diode. One end of the resistor is configured to connect to a positive electrode of the first photovoltaic string, the other end of the resistor is configured to connect to the DC/DC power conversion circuit, a cathode of the diode is configured to connect to a negative electrode of the first photovoltaic string, and an anode of the diode is configured to connect to the DC/DC power conversion circuit. The anti-reverse circuit is disposed, so that it ensures a normal connection status of the first photovoltaic string. Therefore, energy transmitted by the first photovoltaic string can smoothly supply power to the controller, so that the controller is capable of identifying a fault and rectifying the fault. During actual application, an indicator light may be further disposed for the photovoltaic inverter. If the controller is normally connected, the indicator light is on. If the controller is not normally connected, the indicator light is off. With this arrangement, the user can be notified of a status of the controller in a timely manner, and when the controller cannot be powered on, the user is reminded to check whether a reverse connection or another fault occurs in the first photovoltaic string. This improves reliability and safety of the photovoltaic inverter.

It should be noted that, that one end of the resistor is configured to connect to a positive electrode of the first photovoltaic string means that the first photovoltaic string may be directly connected to one end of the resistor, or the first photovoltaic string may be connected to one end of the resistor via another component. This is not limited in this application. Similarly, that the other end of the resistor is configured to connect to the DC/DC power conversion circuit also means that the other end of the resistor may be directly connected to the DC/DC power conversion circuit, or the other end of the resistor may be connected to the DC/DC power conversion circuit via another component. Connection relationships between specific components in the following anti-reverse circuit and the first photovoltaic string as well as the DC/DC power conversion circuit are the same as the foregoing relationships. Details are not described herein again.

In a possible implementation, the anti-reverse circuit includes a resistor and a diode. One end of the resistor is configured to connect to a negative electrode of the first photovoltaic string, the other end of the resistor is configured to connect to the DC/DC power conversion circuit, an anode of the diode is configured to connect to a positive electrode of the first photovoltaic string, and a cathode of the diode is configured to connect to the DC/DC power conversion circuit. According to a same principle, positions of the resistor and the diode in the anti-reverse circuit are interchanged, so that effect of preventing the first photovoltaic string from being reversely connected can also be achieved. Details are not described herein. When the positions of the resistor and the diode are interchanged, the cathode and the anode of the diode also need to be reversed.

In a possible implementation, the anti-reverse circuit includes a first diode and a second diode. An anode of the first diode is configured to connect to a positive electrode of the first photovoltaic string, a cathode of the first diode is configured to connect to the DC/DC power conversion circuit, a cathode of the second diode is configured to connect to a negative electrode of the first photovoltaic string, and an anode of the second diode is configured to connect to the DC/DC power conversion circuit. With this arrangement, when a short-circuit fault occurs on one of the diodes in the anti-reverse circuit, the anti-reverse circuit can still prevent the first photovoltaic string from being reversely connected. This further improves stability of the anti-reverse circuit.

In a possible implementation, the anti-reverse circuit includes a first bridge arm and a second bridge arm that are connected in parallel. The first bridge arm includes a first diode and a second diode that are connected in series, the second bridge arm includes a third diode and a fourth diode that are connected in series, a cathode of the first diode is connected to a cathode of the third diode, and an anode of the second diode is connected to an anode of the fourth diode. A connection point at which the first diode and the second diode are connected in series is configured to connect to a positive electrode of the first photovoltaic string, and a connection point at which the third diode and the fourth diode are connected in series is configured to connect to the DC/DC power conversion circuit. According to a same principle, with this arrangement, when a short-circuit fault occurs on a part of the diodes in the anti-reverse circuit, the anti-reverse circuit can still prevent the first photovoltaic string from being reversely connected. This further improves stability of the anti-reverse circuit.

In a possible implementation, the anti-reverse circuit is connected to the direct current input side of the DC/DC power conversion circuit, or the anti-reverse circuit is connected to the direct current output side of the DC/DC power conversion circuit. When the anti-reverse circuit is connected to the direct current input side of the DC/DC power conversion circuit, a part of circuits in the DC/DC power conversion circuit may be reused. This further reduces used lines and optimizes internal space of the photovoltaic inverter.

In a possible implementation, a quantity of switches in the second switch group is less than or equal to a quantity of second photovoltaic strings connected to the photovoltaic inverter, and each photovoltaic string in the second photovoltaic string is connected to the DC/DC power conversion circuit via at least one switch in the second switch group. In other words, each of a plurality of photovoltaic strings is connected to the DC/DC conversion circuit of the photovoltaic inverter via at least one switch, so that the controller can cut off, in a timely manner, a transmission path on which a reverse current or an overcurrent occurs when identifying a reverse connection fault of the photovoltaic string, to rectify the fault.

According to a second aspect, this application provides a photovoltaic system, including the photovoltaic inverter according to any one of the first aspect and a plurality of photovoltaic strings. The plurality of photovoltaic strings are connected to a direct current input end of the photovoltaic inverter, and configured to input a direct current for the photovoltaic inverter.

According to a third aspect, this application provides a photovoltaic string protection method. The method includes: turning on all switches in a second switch group; and when an overcurrent occurs in a current flowing through a part of switches in the second switch group, turning off the part of switches that is in the second switch group and in which the overcurrent occurs; or turning on all switches in a second switch group; and when a reverse current occurs in a current flowing through a part of switches in the second switch group, turning off the part of switches that is in the second switch group and in which the reverse current occurs. One end of the second switch group is configured to connect to a photovoltaic module, and the other end of the second switch group is configured to connect to a DC/DC power conversion circuit.

In a possible implementation, all the switches in the second switch group are turned on. After a preset time interval, if no overcurrent occurs in the current flowing through the second switch group and no reverse current occurs in the current flowing through the second switch group, the first switch group is turned off. One end of the first switch group is configured to connect to at least one photovoltaic string, and the other end of the first switch group is configured to connect to the DC/DC power conversion circuit.

In general, the photovoltaic inverter provided in this application can identify and rectify a reverse connection fault of the photovoltaic module in a timely manner through simple circuit setting. This significantly improves safety and reliability of the photovoltaic power station.

### BRIEF DESCRIPTION OF DRAWINGS

FIG. 1 is a networking schematic of an optical storage system;
FIG. 2a is a flow direction diagram of a current when a photovoltaic string is normally connected according to this application;
FIG. 2b is a flow direction diagram of a current when some photovoltaic strings are reversely connected according to this application;
FIG. 2c is a flow direction diagram of a current when all photovoltaic strings are reversely connected according to this application;
FIG. 3 is a topology diagram of a direct current side of a photovoltaic inverter that can protect a photovoltaic string according to this application;
FIG. 4a is a topology diagram of a direct current side of a photovoltaic inverter that can protect a photovoltaic string according to this application;
FIG. 4b is a topology diagram of a direct current side of a photovoltaic inverter that can protect a photovoltaic string according to this application;
FIG. 4c is a topology diagram of a direct current side of a photovoltaic inverter that can protect a photovoltaic string according to this application;
FIG. 4d is a topology diagram of a direct current side of a photovoltaic inverter that can protect a photovoltaic string according to this application;
FIG. 5 is a topology diagram of a direct current side of a photovoltaic inverter that can protect a photovoltaic string according to this application;
FIG. 6a is a topology diagram of a direct current side of a photovoltaic inverter that can protect a photovoltaic string according to this application;
FIG. 6b is a topology diagram of a direct current side of a photovoltaic inverter that can protect a photovoltaic string according to this application;
FIG. 6c is a topology diagram of a direct current side of a photovoltaic inverter that can protect a photovoltaic string according to this application; and
FIG. 6d is a topology diagram of a direct current side of a photovoltaic inverter that can protect a photovoltaic string according to this application.

### DESCRIPTION OF EMBODIMENTS

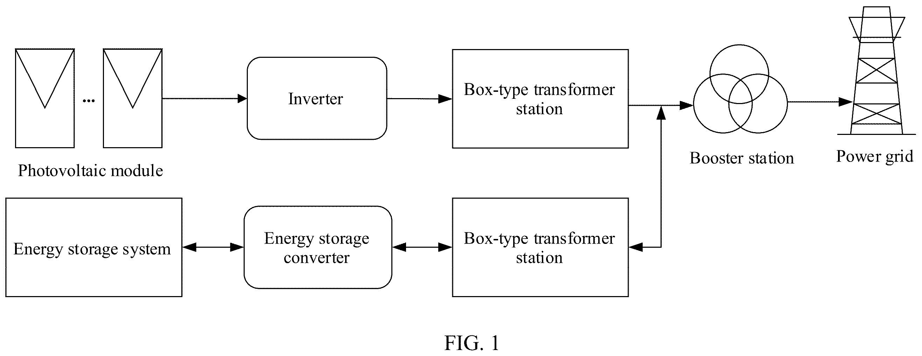

FIG. 1 is a networking schematic of an optical storage system in an alternating current coupling scenario. A photovoltaic module converts solar energy into a direct current through photovoltaic effect; and an inverter converts the direct current output by the photovoltaic module into an alternating current, and further transmits the alternating current to a box-type transformer station. The box-type transformer station converts the low-voltage alternating current output by the inverter into a medium-voltage alternating current, and further transmits the alternating current to a booster station (power grid) or a box-type transformer station corresponding to an energy storage system. The energy storage system stores unstable electrical energy from the photovoltaic module and outputs stable electrical energy to the power grid via a power conversion system and the corresponding box-type transformer station.

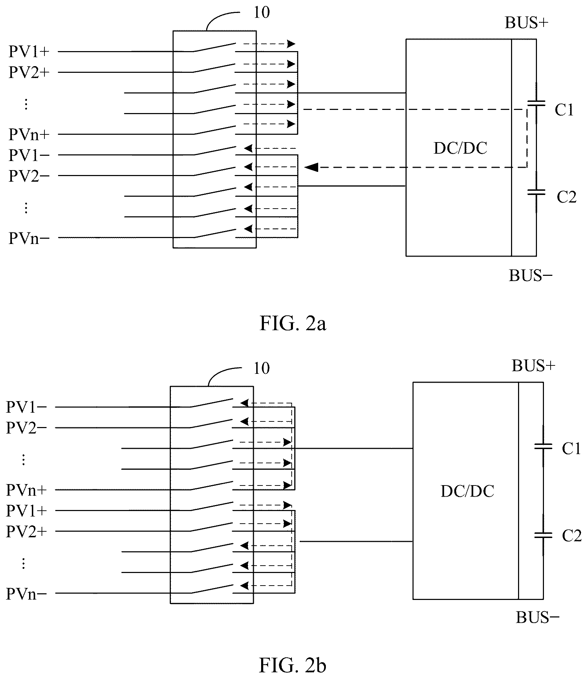

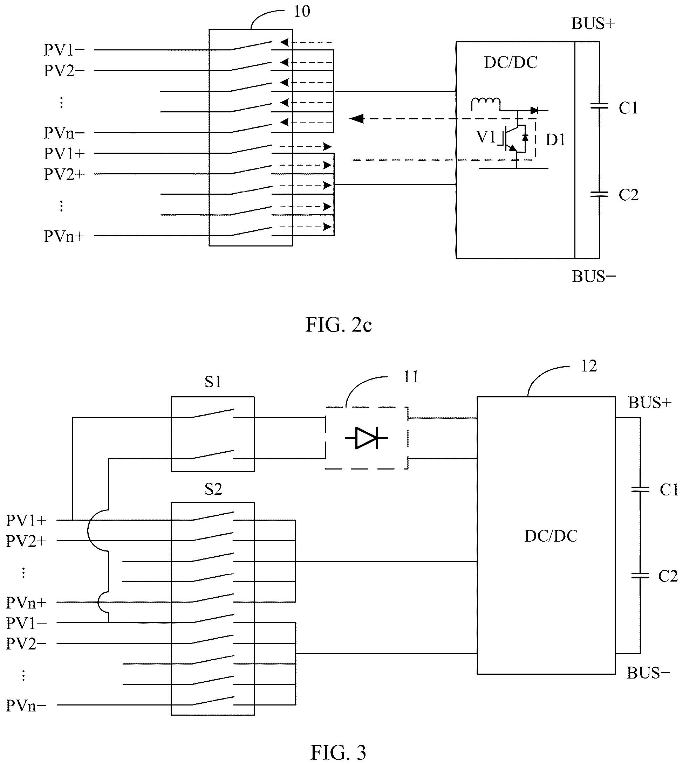

As described in the background, when the photovoltaic inverter is grid-connected for the first time, some or all photovoltaic strings may be reversely connected. If the fault is not identified and handled in a timely manner, the photovoltaic strings or even the photovoltaic inverter may be damaged. With reference to FIG. 2a, FIG. 2b, and FIG. 2c, the following separately analyzes a flow direction of a direct current when all photovoltaic strings are normally connected, when some photovoltaic strings are reversely connected, and when all photovoltaic strings are reversely connected.

First, refer to FIG. 2a. FIG. 2a is a flow direction diagram of a direct current generated by a photovoltaic string when all photovoltaic strings are normally connected to a photovoltaic inverter. A plurality of photovoltaic strings are connected in parallel to a direct current/direct current (direct current/direct current, DC/DC) conversion circuit of the photovoltaic inverter via switches 10 on a direct current side of the photovoltaic inverter. A quantity of photovoltaic strings connected to the photovoltaic inverter is n, where n is a positive integer greater than or equal to 1. It should be noted that one photovoltaic string may include one or more photovoltaic panels, and each photovoltaic panel includes a plurality of photovoltaic cells. PVn+ represents a positive electrode of an n^{th} photovoltaic string, and PVn- represents a negative electrode of the n^{th} photovoltaic string. When a photovoltaic module generates a direct current, the direct current flows out from PVn+, charges bus capacitors C1 and C2 sequentially via the DC/DC conversion circuit and a positive direct current bus, and finally flows into PVn- through a negative direct current bus, to implement a current loop. It should be noted that, in addition to the switches 10 on the direct current side, the DC/DC conversion circuit, and the bus capacitors C1 and C2 shown in FIG. 2a, during actual application, the photovoltaic inverter further includes a direct current/alternating current (direct current/alternating current, DC/AC) conversion circuit, an LCL filter, a relay, and the like that are not shown in FIG. 2a. Details are not described in this application.

In the following, refer to FIG. 2b. FIG. 2b is a flow direction diagram of a direct current generated by a photovoltaic string when some photovoltaic strings are reversely connected. The reversely connected photovoltaic strings are a first photovoltaic string and a second photovoltaic string. In other words, in comparison with FIG. 2a, PV1+ and PV1- are interchanged, and PV2+ and PV2- are also interchanged. In this case, when the switches 10 on the direct current side of the photovoltaic inverter are turned on, direct currents generated by PV(n-2)+ to PVn+ are directly fed into PV1- and PV2-, and direct currents flowing out of PV1+ and PV2+ flow into PV(n-2)- to PVn- to form a current loop, which further causes a direct current bus to lose power. As a result, an auxiliary power supply of the photovoltaic inverter cannot obtain power from the direct current bus or the bus capacitor, and cannot supply power to a controller. Therefore, the controller of the photovoltaic inverter cannot identify, in a timely manner, whether a reverse connection occurs at a photovoltaic string and which specific photovoltaic string is reversely connected. Certainly, the controller cannot turn off, in a timely manner, a switch that is in the switches 10 on the direct current side of the photovoltaic inverter and that is connected in series to the reversely connected photovoltaic string to rectify the fault.

Then, refer to FIG. 2c. FIG. 2c is a flow direction diagram of a direct current generated by a photovoltaic string when all photovoltaic strings are reversely connected. When all the photovoltaic strings are reversely connected, in comparison with FIG. 2a, PVn+ and PVn- are interchanged. In this case, when the switches 10 on the direct current side of the photovoltaic inverter are turned on, direct currents generated by PV1+ to PVn+ pass through a diode D1 connected in anti-parallel to a switching transistor V1 in a boost circuit of the direct current/direct current (direct current/direct current, DC/DC) conversion circuit to form a short-circuit loop, which also further causes a direct current bus to lose power. As a result, the auxiliary power supply of the inverter cannot obtain power from the direct current bus or the bus capacitor, and cannot supply power to a controller. Similarly, the controller of the inverter cannot identify, in a timely manner, whether a reverse connection occurs at a photovoltaic string and a specific position in which the reverse connection occurs at the photovoltaic string. Certainly, the controller also cannot turn off, in a timely manner, a switch that is in the switches 10 on the direct current side of the photovoltaic inverter and that is connected in series to the reversely connected photovoltaic string to rectify the reverse connection fault.

Therefore, to resolve a problem that some or all photovoltaic strings on a direct current side of a photovoltaic inverter are reversely connected, the following specifically describes embodiments of this application with reference to FIG. 3 to FIG. 6d.

First, refer to FIG. 3. FIG. 3 is a topology diagram of a direct current side of a photovoltaic inverter that can protect a photovoltaic string in a timely manner according to this application. Different from the structures shown in FIG. 2a to FIG. 2c, in FIG. 3, a first photovoltaic string, namely, PV1+ and PV1-, is alternatively connected to an input end of a DC/DC power conversion circuit 12 via a first switch group S1 and an anti-reverse circuit 11. It should be noted that, in FIG. 3, a second switch group S2 represents the switches 10 on the direct current side of the photovoltaic inverter in FIG. 2a to FIG. 2c. A working principle of the topology is as follows: Before the photovoltaic inverter is grid-connected for the first time, a user first turns on the first switch group S1. If PV1+ and PV1- are normally connected, that is, PV1+ and the PV1- are not reversely connected, the anti-reverse circuit 11 can be normally conducted, and a direct current bus and direct current bus capacitors C1 and C2 are powered on, so that an auxiliary power supply can obtain power from the direct current bus or the direct current bus capacitors C1 and C2, and supply power to a controller. Then, the second switch group S2 is turned on. In this case, the auxiliary power supply has supplied power to the controller. Therefore, the controller may determine, in real time, whether there is a reversely connected photovoltaic string in all photovoltaic strings connected to the DC/DC power conversion circuit 12. If there is a reversely connected photovoltaic string, the controller may turn off a switch that is in the second switch group S2 and that is connected to the reversely connected photovoltaic string and the DC/DC power conversion circuit 12, to rectify a reverse connection fault. If all photovoltaic strings are normally connected to the DC/DC power conversion circuit 12, the controller controls the first switch group S1 to be turned off, and all the photovoltaic strings are normally connected to the photovoltaic inverter, to implement photovoltaic grid connection.

It should be noted that, after the user first turns on the first switch group S1, if PV1+ and PV1- are normally connected, that is, PV1+ and the PV1- are not reversely connected, an indicator light may be additionally disposed in the photovoltaic inverter, to remind the user that the controller in the photovoltaic inverter can work normally. Therefore, the user may continue to manually turn on the second switch group S2, and turn off the first switch group S1, to implement grid-connected photovoltaic power generation. With this arrangement, even if the reverse connection fault exists in the photovoltaic string connected to the photovoltaic inverter, the controller in the photovoltaic inverter can identify and rectify the reverse connection fault in a timely manner. Certainly, after the controller works normally, the controller may also directly turn on the second switch group S2 and turn off the first switch group S1, and the user does not need to manually turn on the second switch group S2 and turn off the first switch group S1. This is not limited in this application.

In addition, in FIG. 3, for ease of description, this application shows only one photovoltaic string. To be specific, the first photovoltaic string PV1 is connected to the DC/DC power conversion circuit 12 sequentially via the first switch group S1 and the anti-reverse circuit 11. During actual application, a plurality of photovoltaic strings may be disposed to connect to the DC/DC power conversion circuit 12 sequentially via the first switch group S1 and the anti-reverse circuit 11. This is not limited in this application.

It should be further noted that, in FIG. 3, the first switch group S1 includes two switches. The two switches are respectively connected to the anti-reverse circuit 11 via PV1+ and PV1-. During actual application, a quantity of switches in the first switch group S1 is not limited to two. To be specific, there may be one or more switches in the first switch group S1. This is not limited in this application. When there is only one switch in the first switch group S1, the switch may be connected to PV1+, or may be connected to PV1-. This is not limited in this application. According to a same principle, in FIG. 3, a quantity of switches in the second switch group S2 is not limited in this application either. To be specific, there may be one or more switches on a connection line of each photovoltaic string and the DC/DC power conversion circuit 12.

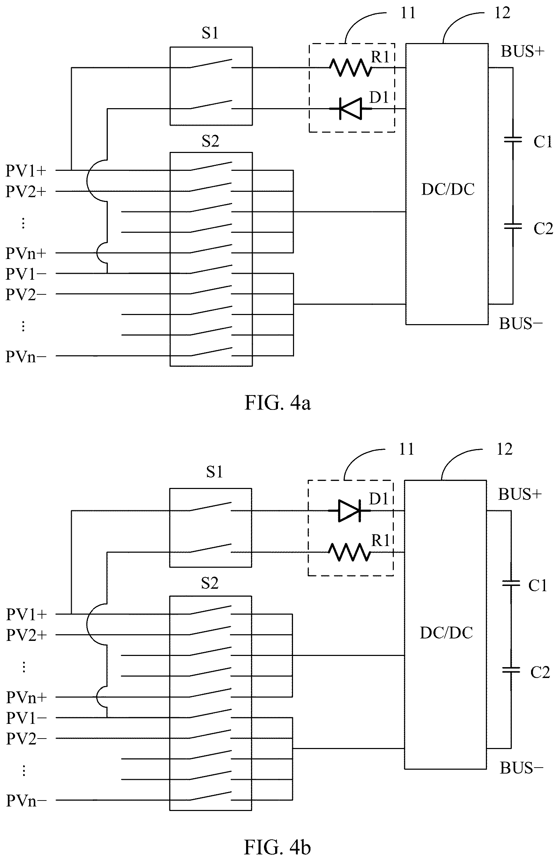

The following describes an embodiment provided in this application with reference to FIG. 4a. Different from FIG. 3, FIG. 4a shows a specific structure of the anti-reverse circuit 11. The anti-reverse circuit 11 includes a resistor R1 and a diode D1. One end of the resistor R1 is connected to PV1+, the other end of the resistor R1 is connected to the DC/DC power conversion circuit 12, an anode of the diode D1 is connected to the DC/DC power conversion circuit 12, and a cathode of the diode D1 is connected to PV1-. With this arrangement, it ensures that the first photovoltaic string is normally connected. In other words, a current output by the first photovoltaic string may flow through the direct current bus and the direct current bus capacitors C1 and C2 to power on the controller via the auxiliary power supply, so that the controller is capable of identifying a reverse connection fault of the photovoltaic string. According to a same principle, for a structure of the anti-reverse circuit 11, refer to FIG. 4b. Different from the structure shown in FIG. 4a, in FIG. 4b, an anode of the diode D1 is connected to PV1+, a cathode of the diode D1 is connected to the DC/DC power conversion circuit 12, one end of the resistor R1 is connected to PV1-, and the other end of the resistor R1 is connected to the DC/DC power conversion circuit 12. In addition, it should be noted that, in the anti-reverse circuit 11 shown in FIG. 4a and FIG. 4b, a main function of the resistor R1 is current limiting, and a main function of the diode D1 is to prevent a short-circuit loop when the first photovoltaic module is reversely connected.

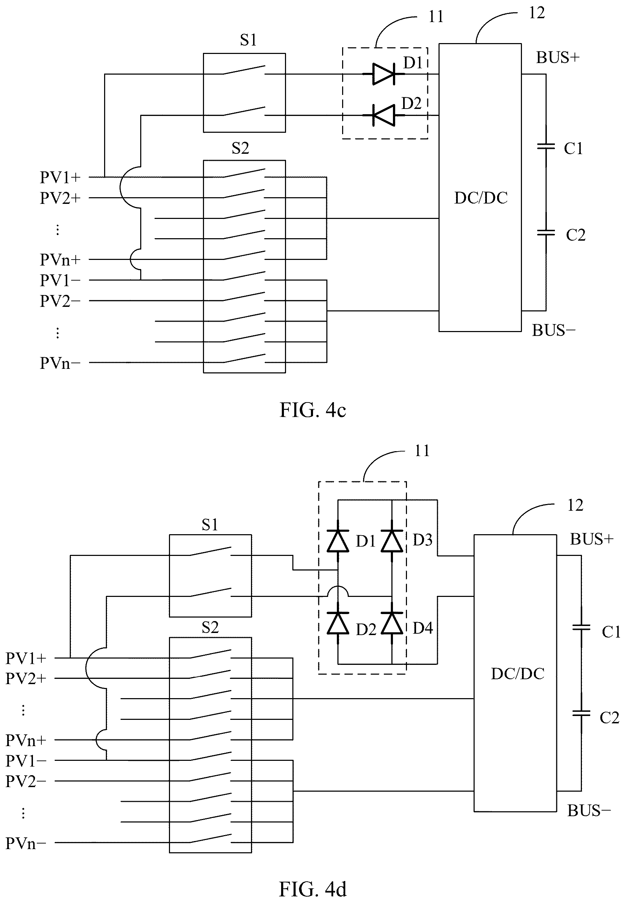

The following describes an embodiment provided in this application with reference to FIG. 4c. Different from the structures shown in FIG. 4a and FIG. 4b, the anti-reverse circuit 11 shown in FIG. 4c includes two diodes: a diode D1 and a diode D2. An anode of the diode D1 is connected to PV1+, a cathode of the diode D1 is connected to the DC/DC power conversion circuit 12, an anode of the diode D2 is connected to the DC/DC power conversion circuit 12, and a cathode of the diode D2 is connected to PV1-. The two diodes are disposed in the anti-reverse circuit 11, so that the anti-reverse circuit 11 can still work even if a short-circuit fault occurs on one of the two diodes. It ensures that a current output by the first photovoltaic string flows through the direct current bus and the direct current bus capacitors C1 and C2 to power on the controller via the auxiliary power supply, so that the controller is capable of identifying a reverse connection fault of the photovoltaic string.

The following describes an embodiment provided in this application with reference to FIG. 4d. Different from the structures shown in FIG. 4a, FIG. 4b, and FIG. 4c, the anti-reverse circuit 11 shown in FIG. 4d is a full-bridge circuit. Specifically, the anti-reverse circuit 11 includes a first bridge arm and a second bridge arm that are connected in parallel, the first bridge arm includes a diode D1 and a diode D2 that are connected in series, and the second bridge arm includes a diode D3 and a diode D4 that are connected in series. PV1+ is connected, via the first switch group S1, to a connection point at which the diode D1 and the diode D2 are connected in series, and PV- is connected, via the first switch group S1, to a connection point at which the diode D3 and the diode D4 are connected in series. A cathode of the diode D1 is connected to a cathode of the diode D3, a connection point at which the diode D1 and the diode D3 are connected in parallel is connected to the DC/DC power conversion circuit 12, an anode of the diode D2 is connected to an anode of the diode D4, and a connection point at which the diode D2 and the diode D4 are connected in parallel is connected to the DC/DC power conversion circuit 12. With this arrangement, it also ensures that a current output by the first photovoltaic string flows through the direct current bus and the direct current bus capacitors C1 and C2 to power on the controller via the auxiliary power supply, so that the controller is capable of identifying a reverse connection fault of the photovoltaic string. Similar to the structure shown in FIG. 4c, even if a short-circuit fault occurs on one of the diode D1 and the diode D4, the anti-reverse circuit 11 can still work normally. In addition, it should be noted that, during actual application, resistors may alternatively be connected in series on the first bridge arm and the second bridge arm to implement a current limiting function. This is not limited in this application.

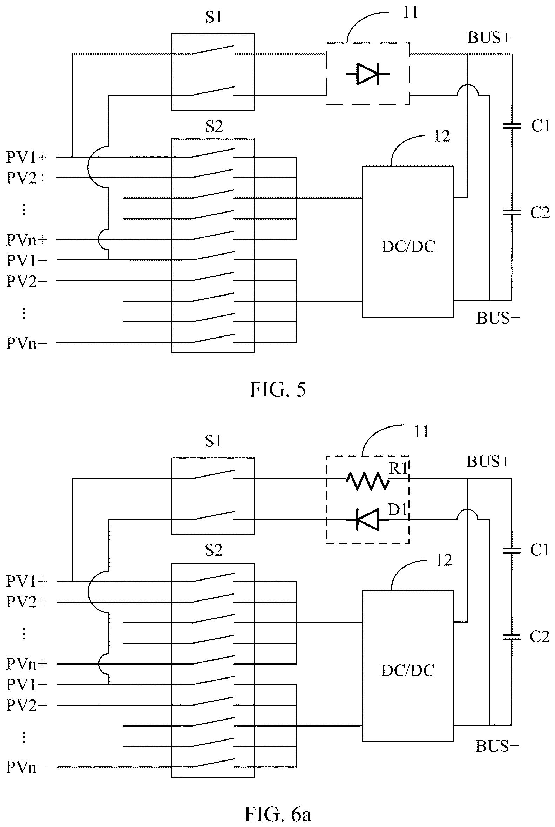

In the foregoing embodiments, the first photovoltaic string, namely, PV1+ and PV1-, is connected to the input end of the DC/DC power conversion circuit 12 via both the first switch group S1 and the anti-reverse circuit 11. During actual application, the first photovoltaic string, namely, PV1+ and PV1-, may alternatively be connected to an output end of the DC/DC power conversion circuit 12 via the first switch group S1 and the anti-reverse circuit 11. The following describes embodiments of this application with reference to FIG. 5 and FIG. 6a to FIG. 6d.

First, refer to FIG. 5. FIG. 5 is a topology diagram of a direct current side of a photovoltaic inverter that can identify, in a timely manner, a reversely connected photovoltaic string according to this application. Different from the structures shown in FIG. 2a to FIG. 2c, in FIG. 5, a first photovoltaic string, namely, PV1+ and PV1-, is alternatively connected to an output end of a DC/DC power conversion circuit 12 via a first switch group S1 and an anti-reverse circuit 11. It should be noted that, in FIG. 5, a second switch group S2 represents the switches 10 on the direct current side of the photovoltaic inverter in FIG. 2a to FIG. 2c. A working principle of the topology is as follows: Before the photovoltaic inverter is grid-connected for the first time, a user first turns on the first switch group S1. If PV1+ and PV1- are normally connected, that is, PV1+ and the PV1- are not reversely connected, the anti-reverse circuit 11 can be normally conducted, and a direct current bus and direct current bus capacitors C1 and C2 are powered on, so that an auxiliary power supply can obtain power from the direct current bus or the direct current bus capacitors C1 and C2, and supply power to a controller. Then, the second switch group S2 is turned on. In this case, the auxiliary power supply has supplied power to the controller. Therefore, the controller may determine, in real time, whether there is a reversely connected photovoltaic string in all photovoltaic strings connected to the DC/DC power conversion circuit 12. If there is a reversely connected photovoltaic string, the controller may turn off a switch that is in the second switch group S2 and that is connected to the reversely connected photovoltaic string and the DC/DC power conversion circuit 12, to rectify a reverse connection fault. If all photovoltaic strings are normally connected to the DC/DC power conversion circuit 12, the controller controls the first switch group S1 to be turned off, and all the photovoltaic strings are normally connected to the photovoltaic inverter, to implement photovoltaic grid connection.

It should be noted that, after the user first turns on the first switch group S1, if PV1+ and PV1- are normally connected, that is, PV1+ and the PV1- are not reversely connected, an indicator light may be additionally disposed in the photovoltaic inverter, to remind the user that the controller in the photovoltaic inverter can work normally. Therefore, the user may continue to manually turn on the second switch group S2, and turn off the first switch group S1, to implement grid-connected photovoltaic power generation. With this arrangement, even if the reverse connection fault exists in the photovoltaic string connected to the photovoltaic inverter, the controller in the photovoltaic inverter can identify and rectify the reverse connection fault in a timely manner. Certainly, after the controller works normally, the controller may also directly turn on the second switch group S2 and turn off the first switch group S1, and the user does not need to manually turn on the second switch group S2 and turn off the first switch group S1. This is not limited in this application.

In addition, in FIG. 5, for ease of description, this application shows only one photovoltaic string. To be specific, the first photovoltaic string PV1 is connected to the DC/DC power conversion circuit 12 sequentially via the first switch group S1 and the anti-reverse circuit 11. During actual application, a plurality of photovoltaic strings may be disposed to connect to the DC/DC power conversion circuit 12 sequentially via the first switch group S1 and the anti-reverse circuit 11. This is not limited in this application.

It should be further noted that, in FIG. 5, the first switch group S1 includes two switches. The two switches are respectively connected to the anti-reverse circuit 11 via PV1+ and PV1-. During actual application, a quantity of switches in the first switch group S1 is not limited to two. To be specific, there may be one or more switches in the first switch group S1. This is not limited in this application. When there is only one switch in the first switch group S1, the switch may be connected to PV1+, or may be connected to PV1-. This is not limited in this application. According to a same principle, in FIG. 5, a quantity of switches in the second switch group S2 is not limited in this application either. To be specific, there may be one or more switches on a connection line of each photovoltaic string and the DC/DC power conversion circuit 12.

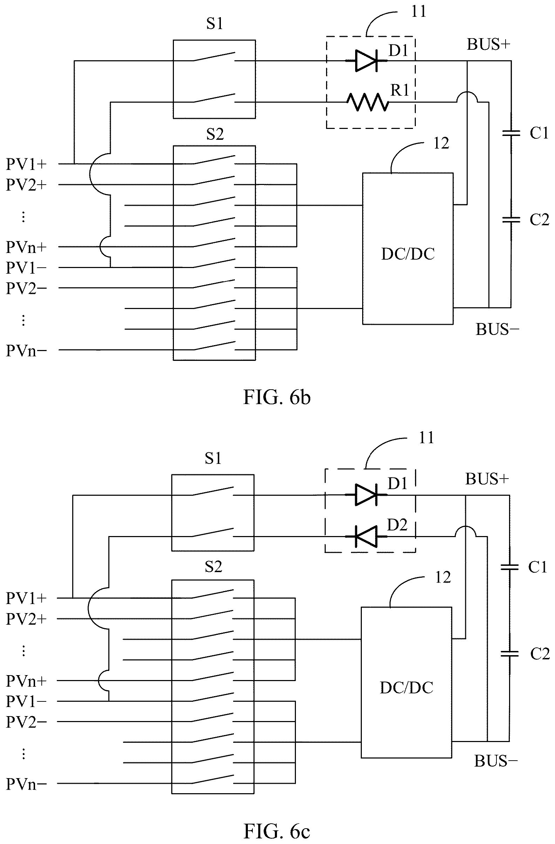

The following describes an embodiment provided in this application with reference to FIG. 6a. Different from FIG. 5, FIG. 6a shows a specific structure of the anti-reverse circuit 11. The anti-reverse circuit 11 includes a resistor R1 and a diode D1. One end of the resistor R1 is connected to PV1+, the other end of the resistor R1 is connected to the DC/DC power conversion circuit 12, an anode of the diode D1 is connected to the DC/DC power conversion circuit 12, and a cathode of the diode D1 is connected to PV1-. With this arrangement, it ensures that the first photovoltaic string is normally connected. In other words, a current output by the first photovoltaic string may flow through the direct current bus and the direct current bus capacitors C1 and C2 to power on the controller via the auxiliary power supply, so that the controller is capable of identifying a reverse connection fault of the photovoltaic string. According to a same principle, for a structure of the anti-reverse circuit 11, refer to FIG. 6b. Different from the structure shown in FIG. 6a, in FIG. 6b, an anode of the diode D1 is connected to PV1-, a cathode of the diode D1 is connected to the DC/DC power conversion circuit 12, one end of the resistor R1 is connected to PV1-, and the other end of the resistor R1 is connected to the DC/DC power conversion circuit 12. In addition, it should be noted that, in the anti-reverse circuit 11 shown in FIG. 4a and FIG. 4b, a main function of the resistor R1 is current limiting, and a main function of the diode D1 is to prevent a short-circuit loop when the first photovoltaic module is reversely connected.

The following describes an embodiment provided in this application with reference to FIG. 6c. Different from the structures shown in FIG. 6a and FIG. 6b, the anti-reverse circuit 11 shown in FIG. 6c includes two diodes: a diode D1 and a diode D2. An anode of the diode D1 is connected to PV1+, a cathode of the diode D1 is connected to the DC/DC power conversion circuit 12, an anode of the diode D2 is connected to the DC/DC power conversion circuit 12, and a cathode of the diode D2 is connected to PV1-. The two diodes are disposed in the anti-reverse circuit 11, so that the anti-reverse circuit 11 can still work even if a short-circuit fault occurs on one of the two diodes. It ensures that a current output by the first photovoltaic string flows through the direct current bus and the direct current bus capacitors C1 and C2 to power on the controller via the auxiliary power supply, so that the controller is capable of identifying a reverse connection fault of the photovoltaic string.

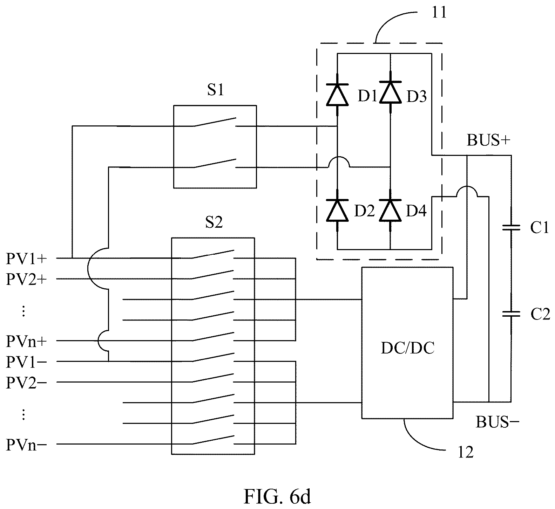

The following describes an embodiment provided in this application with reference to FIG. 6d. Different from the structures shown in FIG. 6a, FIG. 6b, and FIG. 6c, the anti-reverse circuit 11 shown in FIG. 6d is a full-bridge circuit. Specifically, the anti-reverse circuit 11 includes a first bridge arm and a second bridge arm that are connected in parallel, the first bridge arm includes a diode D1 and a diode D2 that are connected in series, and the second bridge arm includes a diode D3 and a diode D6 that are connected in series. PV1+ is connected, via the first switch group S1, to a connection point at which the diode D1 and the diode D2 are connected in series, and PV- is connected, via the first switch group S1, to a connection point at which the diode D3 and the diode D4 are connected in series. A cathode of the diode D1 is connected to a cathode of the diode D3, a connection point at which the diode D1 and the diode D3 are connected in parallel is connected to the DC/DC power conversion circuit 12, an anode of the diode D2 is connected to an anode of the diode D4, and a connection point at which the diode D2 and the diode D4 are connected in parallel is connected to the DC/DC power conversion circuit 12. With this arrangement, it also ensures that a current output by the first photovoltaic string flows through the direct current bus and the direct current bus capacitors C1 and C2 to power on the controller via the auxiliary power supply, so that the controller is capable of identifying a reverse connection fault of the photovoltaic string. Similar to the structure shown in FIG. 6c, even if a short-circuit fault occurs on one of the diode D1 and the diode D4, the anti-reverse circuit 11 can still work normally. In addition, it should be noted that, during actual application, resistors may alternatively be connected in series on the first bridge arm and the second bridge arm to implement a current limiting function. This is not limited in this application.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made on the basis of the technical solutions of the present invention shall fall within the protection scope of the present invention.

## Claims

1. A photovoltaic inverter, wherein the photovoltaic inverter comprises a first switch group, a second switch group, a direct current/direct current DC/DC power conversion circuit, a bus capacitor, and a controller, wherein
the bus capacitor is connected to a direct current input end or a direct current output end of the DC/DC power conversion circuit;
one end of the first switch group is configured to connect to a first photovoltaic string, and the other end of the first switch group is configured to connect to the bus capacitor, so that when the first switch group is turned on, the controller is enabled to obtain power from the bus capacitor and be powered on;
one end of the second switch group is configured to connect to a second photovoltaic string, and the other end of the second switch group is configured to connect to the direct current input end of the DC/DC power conversion circuit, wherein the first photovoltaic string is a part of the second photovoltaic string; and
after the controller is powered on and the second switch group is turned on, the controller is configured to: in response to that an overcurrent occurs in a current flowing through the second switch group, turn off a switch that is in the second switch group and in which the overcurrent occurs; or
after the controller is powered on and the second switch group is turned on, the controller is configured to: in response to that a current flowing through the second switch group comprises a reverse current, turn off a switch that is in the second switch group and in which the reverse current occurs.

2. The photovoltaic inverter according to claim 1, wherein the photovoltaic inverter comprises an anti-reverse circuit, the anti-reverse circuit is connected in series between the first switch group and the bus capacitor, or the anti-reverse circuit is connected in series between the first switch group and the first photovoltaic string, and the anti-reverse circuit is configured to prevent the reverse current from flowing into the bus capacitor when the first photovoltaic string is reversely connected.

3. The photovoltaic inverter according to claim 1, wherein after the controller is powered on and the second switch group is turned on, if no overcurrent occurs in the current flowing through the second switch group and no reverse current occurs in the current flowing through the second switch group, the controller is configured to turn off the first switch group.

4. The photovoltaic inverter according to claim 1, wherein the photovoltaic inverter comprises an indicator light, and if the first switch group is turned on to enable the controller to obtain power from the bus capacitor and be powered on, the indicator light is on, wherein that the indicator light is on indicates a user to turn on the second switch group.

5. The photovoltaic inverter according to claim 4, wherein after the second switch group is turned on, the indicator light remains on, wherein that the indicator light remains on indicates the user to turn off the first switch group after the second switch group is turned on.

6. The photovoltaic inverter according to any one of claims 1 to 4, wherein the photovoltaic inverter comprises the indicator light, and if the first switch group is turned on not to enable the controller to obtain power from the bus capacitor and be powered on, the indicator light is off, wherein that the indicator light is off indicates that a fault exists.

7. The photovoltaic inverter according to any one of claims 1 to 6, wherein the photovoltaic inverter comprises an auxiliary power supply, the auxiliary power supply is connected to the bus capacitor, and when the first switch group is turned on, the auxiliary power supply is configured to obtain power from the bus capacitor to supply power to the controller.

8. The photovoltaic inverter according to claim 1 or 2, wherein the anti-reverse circuit is connected in series between the first switch group and the bus capacitor, the anti-reverse circuit comprises a diode, one end of the diode is connected to a positive electrode or a negative electrode of the first photovoltaic string via a switch in the first switch group, the other end of the diode is configured to connect to the DC/DC power conversion circuit, and a conduction direction of the diode is opposite to a direction of the reverse current.

9. The photovoltaic inverter according to claim 8, wherein the anti-reverse circuit comprises a resistor; one end of the resistor and the diode that are connected in series is connected to the first photovoltaic module via the switch in the first switch group, and the other end of the resistor and the diode that are connected in series is connected to the DC/DC power conversion circuit; or one end of the resistor is connected to the first photovoltaic string via the first switch group, and the other end of the resistor is connected to the DC/DC power conversion circuit.

10. The photovoltaic inverter according to claim 1 or 2, wherein the anti-reverse circuit is connected in series between the first switch group and the bus capacitor, and the anti-reverse circuit comprises a first diode and a second diode, wherein
an anode of the first diode is connected to a positive electrode of the first photovoltaic string via a switch in the first switch group, a cathode of the first diode is configured to connect to the DC/DC power conversion circuit, a cathode of the second diode is connected to a negative electrode of the first photovoltaic string via the switch in the first switch group, and an anode of the second diode is configured to connect to the DC/DC power conversion circuit.

11. The photovoltaic inverter according to claim 10, wherein the anti-reverse circuit comprises one resistor, and the resistor is connected to the first photovoltaic string and the DC/DC power conversion circuit via the switch in the first switch group after being connected in series to the first diode, or the resistor is connected to the first photovoltaic string and the DC/DC power conversion circuit via the switch in the first switch group after being connected in series to the second diode.

12. The photovoltaic inverter according to claim 10, wherein the anti-reverse circuit comprises two resistors, one of the resistors is connected to the first photovoltaic string and the DC/DC power conversion circuit via the switch in the first switch group after being connected in series to the first diode, and the other resistor is connected to the first photovoltaic string and the DC/DC power conversion circuit via the switch in the first switch group after being connected in series to the second diode.

13. The photovoltaic inverter according to claim 1 or 2, wherein the anti-reverse circuit comprises a first bridge arm and a second bridge arm that are connected in parallel, wherein
the first bridge arm comprises a first diode and a second diode that are connected in series, the second bridge arm comprises a third diode and a fourth diode that are connected in series, a cathode of the first diode is connected to a cathode of the third diode, and an anode of the second diode is connected to an anode of the fourth diode; and
a connection point at which the first diode and the second diode are connected in series is configured to connect to a positive electrode of the first photovoltaic string, and a connection point at which the third diode and the fourth diode are connected in series is configured to connect to the DC/DC power conversion circuit.

14. The photovoltaic inverter according to any one of claims 1 to 5, wherein the anti-reverse circuit is connected to a direct current output side of the DC/DC power conversion circuit, and the bus capacitor is connected to the direct current output side of the DC/DC power conversion circuit and connected to the first photovoltaic string via the anti-reverse connection circuit and the first switch group, so that power is obtained from the first photovoltaic string to power on the auxiliary power supply when the first switch group is turned on.

15. The photovoltaic inverter according to any one of claims 1 to 5, wherein the anti-reverse circuit is connected to a direct current input side of the DC/DC power conversion circuit, and the bus capacitor is connected to the direct current input side of the DC/DC power conversion circuit and connected to the first photovoltaic string via the anti-reverse connection circuit and the first switch group.

16. The photovoltaic inverter according to claim 1 or 2, wherein the anti-reverse circuit is connected in series between the first switch group and the first photovoltaic string, the anti-reverse circuit comprises a diode, one end of the diode is connected to a positive electrode or a negative electrode of the first photovoltaic string, the other end of the diode is configured to connect to the DC/DC power conversion circuit via a switch in the first switch group, and a conduction direction of the diode is opposite to a direction of the reverse current.

17. The photovoltaic inverter according to claim 16, wherein the anti-reverse circuit comprises a resistor; one end of the resistor and the diode that are connected in series is configured to connect to the first photovoltaic module, and the other end of the resistor and the diode that are connected in series is connected to the DC/DC power conversion circuit via the switch in the first switch group; or one end of the resistor is configured to connect to the first photovoltaic string, and the other end of the resistor is connected to the DC/DC power conversion circuit via the switch in the first switch group.

18. A photovoltaic string protection method, applied to a photovoltaic inverter, wherein the method comprises:
connecting a first photovoltaic string to a bus capacitor of the inverter via a first switch group, to charge the bus capacitor to power on a controller of the inverter; and
after the controller is powered on and the second switch group is turned on, in response to that an overcurrent occurs in a current flowing through a part of switches in the second switch group, turning off the part of switches that is in the second switch group and in which the overcurrent occurs; or
after the second switch group is turned on, in response to that a reverse current occurs in a part of switches in the second switch group, turning off the part of switches that is in the second switch group and in which the reverse current occurs, wherein one end of the second switch group is configured to connect to a second photovoltaic string, the other end of the second switch group is configured to connect to a DC/DC power conversion circuit, and the first photovoltaic string is a part of the second photovoltaic string.
